# EUROPEAN PATENT APPLICATION

(11) **EP 2 320 684 A1**
(43) Date of publication of application: **11.05.2011**
(21) Application number: 09290851.6
(22) Date of filing: 09.11.2009
(51) Int. Cl.: H04W 4/02, H04W 64/00

(54) **Mobile communications device and method of operating a mobile communications device**

(71) Applicant: Alcatel Lucent, 75008 Paris (FR)
(72) Inventor: Mayer, Hans-Peter, 71254 Ditzingen (DE); Wild, Thorsten, 70435 Stuttgart (DE); Ohm, Michael, 70372 Stuttgart (DE)
(74) Representative: Schäfer, Wolfgang

(57) **Abstract**

The invention relates to a mobile communications device (10), particularly mobile terminal of a cellular communications network, comprising a data transmission interface (14) capable of wireless data transmission, wherein said communications device (10) is configured to output directional information indicating in which spatial direction to move the communications device (10) in order to improve a predetermined quality measure of a data transmission.

## Description

### Field of the Invention

The present invention relates to a mobile communications device, particularly a mobile terminal of a cellular communications network, comprising a data transmission interface capable of wireless data transmission.

The present invention also relates to a method of operating such a mobile communications device.

### Background

In communications systems which are based on wireless data transmission, a receive signal quality usually depends on an actual location of the communications device or a user thereof, respectively. A basic need of the users of such communications devices is to have sufficient radio coverage, and in future data-centric wireless systems also a high user data rate.

Accordingly, there is a need to provide more sophisticated communications devices and operating methods for such communications devices which enable an improved wireless data transmission.

### Summary

According to the present invention, regarding the above-mentioned communications device, this object is achieved by said communications device being configured to output directional information indicating in which spatial direction to move the communications device in order to improve a predetermined quality measure of a data transmission.

The inventive configuration of the communications device advantageously enables to signal to a user of said communications device a specific direction the user has to move to in order to improve the quality of an ongoing or a future wireless data transmission. Of course, such data transmission may comprise speech, multimedia streaming data and typical packet data transmission or any other types of data transmission. I.e., any type of wireless data transmission benefits from the inventive principle.

According to an advantageous embodiment, said communications device is also configured to output distance information in addition to said inventive directional information. This way, a user of the inventive communications device is also provided with information on how far to move in the signalled spatial direction to improve data transmission.

According to a further embodiment, the communications device may also be configured to output information on the expected improvement of the quality of data transmission (e.g., data rate) related to the change of position or the proposed location, respectively. Thus, prior to moving, the user could be notified of an expected data rate at a new position so that he can judge whether to move to said new position or not.

According to a preferred embodiment, a particularly useful indication of a specific spatial direction to move to may be given by indicator means for optically and/or acoustically signalling said directional information. Likewise, the inventive signalling of distance information may be performed.

A further very advantageous embodiment proposes to implement said indicator means in form of an application, preferably a software or firmware application, executed by calculation means of said communications device. In this case, e.g. existing navigation capabilities of the communications device may be employed for improving the display of directional information to the user. The communications device may also be configured to graphically display on map of a navigation application, which is installed on said device, various areas which offer an improved wireless data transmission, which may also be denoted as "sweet spots". Thus, the device's user can decide on where to move to improve wireless data transmission.

According to a further advantageous embodiment, said communications device is configured to determine its position, particularly by employing at least one of the following techniques: A positioning system, particularly the global positioning system, GPS; analysing a signal strength and/or phase relationships between signals of said wireless data transmission; analysing cell identifiers of a cellular communications network which enables said wireless data transmission.

The position detection of the communications device enables to provide very precise direction information to the user on where to move together with said communications device in order to improve the wireless radio transmission. As already explained above, it is possible to use absolute position information of said communications device such as GPS coordinates and/or relative position information which may e.g. be given by analysing phase relationships and/or timing information comprised within signals exchanged in the context of a wireless data transmission with a further device such as a base station of a mobile communications network.

According to a further preferred embodiment, said communications device is configured to use at least one of the following signal quality metrics as said quality measure: A power level of a signal received and said communications device and/or a further device communicating with said communications device, a signal to interference plus noise ratio SINR, an interference level, an expected throughput, a multiple input multiple output, MINO, channel rank indicator.

It is also possible to use a combination of the aforementioned parameters in order to derive information that may be used as a quality measure to judge in which direction to move the communications device in order to improve the wireless data transmission.

According to yet another advantageous embodiment, said communications device is configured to collect and/or store information on said quality measure, preferably together with associated position information, which may have been determined by the communications device using one of the aforedescribed per se known techniques.

The quality measure data and/or position information may be stored locally to the communications device in order to build a map which may later on be used to determine such positions or regions which enable a particularly high data transmission rate or an improved wireless data transmission, generally.

It is also possible for the communications device to be configured to store quality measure data and/or position information to a remote device which may e.g. be accomplished by, preferably periodically, transmitting gathered data to the remote device. Such a remote device may be a base station of a cellular communications network the inventive mobile communications device is used with.

For performing the inventive method of providing directional information indicating in which spatial direction to move the communications device in order to improve a predetermined quality measure of a data transmission, the inventive communications device may also retrieve quality measure data and/or position data from said base station.

By implementing the functionality of gathering quality measure data and position data and storing said data to a central data base within a plurality of inventive mobile communications devices, a comparatively precise map of said quality measure (s) may be build in a comparatively short time.

Consequently, the users of inventive mobile communications devices may advantageously be provided with precise quality measure and geographical information.

Such a map relating quality measure information to position information may also be employed by the network's operator to improve the network, i.e. regarding radio coverage.

A further aspect of the present invention is given by the method of operating a mobile communications device according to claim 9. According to the inventive method, said communications device outputs directional information indicating in which a spatial direction to move the communications device in order to improve a predetermined quality measure of a data transmission.

According to an advantageous embodiment, said communications device also outputs distance information in addition to said inventive directional information, which provides a user of the inventive communications device with information on how far to move in the signalled spatial direction to improve data transmission.

To enable an intuitive information of / signalling to the device's user, the inventive communications device may signal said directional information and/or said distance information optically and/or acoustically and/or in form of an application executed by calculation means of said communications device. For instance, the inventive functionality may be integrated into an existing navigation system of the communications device thus enabling a very intuitive display of the spatial direction information.

Existing geographical information with related quality measure data collected before or retrieved from a remote device such as a central data base may also be blended into the navigation system's screen in order to provide the user with information on where to move in order to improve a wireless data transmission.

Further advantageous embodiments of the inventive method are given in the dependent claims.

### Brief Description of the Figures

Further features, aspects and advantages of the present invention are given in the following detailed description with reference to the drawings in which:
- Figure 1a: depicts a first scenario for application of the inventive method,
- Figure 1b: depicts the scenario of Figure 1a after application of the inventive method,
- Figure 2: schematically depicts details of an embodiment of the inventive communications device, and
- Figure 3: depicts a simplified flowchart of an embodiment of the inventive method.

### Description of the Embodiments

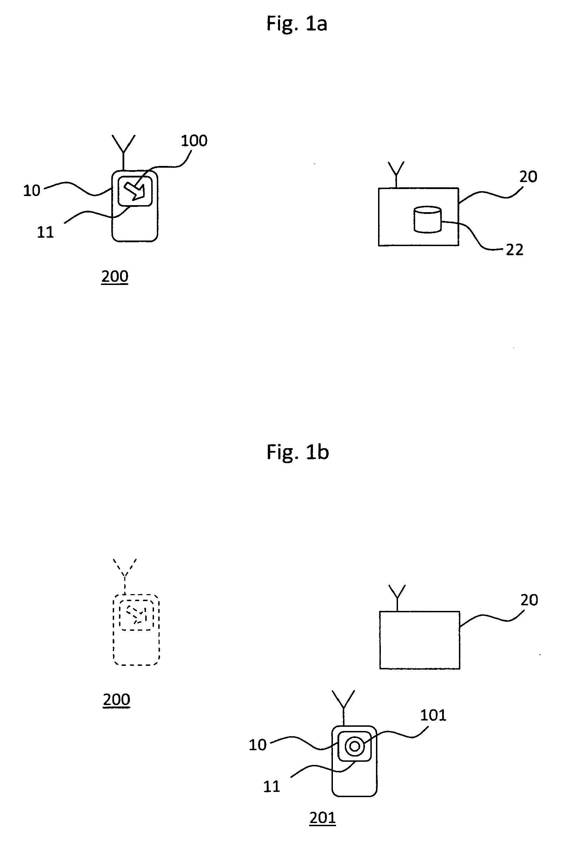

Figure 1a depicts a scenario of a wireless communications network. For the present example, the wireless communications network is a cellular mobile telecommunications network, for instance according to the global system for mobile communications, GSM, standard. The invention, however, is not limited to a specific communications standard, it may rather be employed with any wireless communications device and system.

The communications network comprises a base station 20 which in a per se known manner enables wireless data transmission with one or more mobile terminals.

Figure 1a also depicts an inventive mobile communications device 10, which is in the present example a terminal of the cellular communications network.

The mobile communications device 10 comprises a display 11 to enable interaction with a user (not shown).

According to the scenario depicted in Figure 1a, the communications device 10 is located in a first area 200 which may e.g. be defined by absolute position coordinates such as GPS coordinates or by relative coordinates, e.g. with respect to the position of the base station 20.

In order to guide a user of the inventive communications device 10 on how to experience better wireless data transmission service, e.g. in the terms of a higher data transmission rate, the inventive method proposes that said communications device 10 outputs directional information indicating in which spatial direction to move the communications device 10 in order to improve a predetermined quality measure of the data transmission performed with the communications device 10.

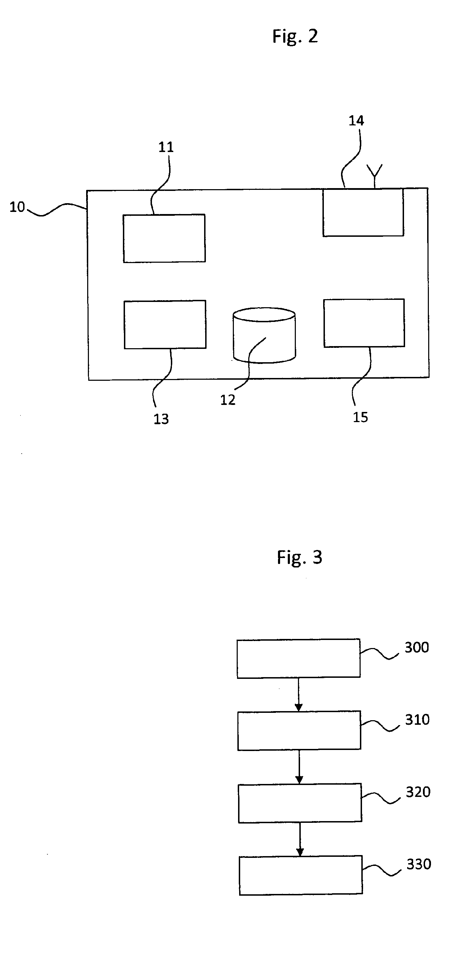

For guiding a user of the communications device 10 in the above explained sense, the inventive method, cf. Figure 3, proposes to determine the position of the communications device 10, which is accomplished in step 300 of the inventive method.

The determination of the position of the communications device 10 may e.g. be performed by using a conventional GPS system, which yields absolute position coordinates of the communications device 10.

Step 300 of the inventive method may also provide to determine a relative position of the communications device 10 as compared to a further device the communications device 10 is communicating with, in the present example the base station 20. Such relative position information may e.g. be determined by analysing a signal strength of signals received in the communications device 10 from the base station 20.

In the case of an ongoing data transmission between the base station 20 and the communications device 10, the base station 20 may also forward a received signal strength denoting the receiving power sent by the inventive communications device 10 to the base station 20 back to the communications device 10 again for evaluation.

Phase relationships between signals of the wireless data transmission may also be analysed, as well as cell identifiers of a cellular communications network which enables said wireless data transmission in order to derive position information of said communications device 10. After the position determination of step 300, the inventive method proposes to perform a determination 310 of a current quality measure of a data transmission of the communications device 10. The current quality measure enables to estimate whether the current location 200 (Figure 1a) already offers optimal communication conditions or whether there may be other locations which might offer even better communication conditions such as higher data rates and the like.

The inventive communications device 10 is configured to use at least one of the following signal quality metrics as said quality measure or any combination thereof: A power level of a signal received at said communications device 10 and/or a further device communicating with said communications device, a signal to interference plus noise ratio, SINR, an interference level, an expected throughput, a multiple input multiple output, MINO, channel rank indicator.

Once the current quality measure of the data transmission at the current location 200 of the communications device 10 is determined, the inventive method in step 320 (Figure 3) proposes to analyse whether there are further locations which possibly offer improved data transmission conditions, i.e. a higher quality measure. Such a location 201 is depicted in Figure 1b.

After determining 320 a place 201 with a higher quality measure for data transmissions, the inventive communications device 10 in step 330 outputs directional information 100 (Figure 1a) that indicates to a user in which spatial direction to move the communications device 10 in order to improve a predetermined quality measure of the data transmission.

According to an advantageous embodiment, said communications device 10 also outputs distance information in addition to said inventive directional information 100, which provides a user of the inventive communications device 10 with information on how far to move in the signalled spatial direction to improve data transmission.

According to the present embodiment, the communications device 10 is configured to output visual information 100 on its display 11 to guide the device's user to move to the preferred location 201. Said visual information 100 may comprise information on a spatial direction and/or distance information and further information that may assist the user in finding a new position with better data transmission conditions.

According to a further embodiment, the communications device 10 may also output information on the expected improvement of the quality of data transmission (e.g., data rate) related to the change of position or the proposed location 201, respectively. Thus, prior to moving, the user could be notified of an expected data rate at a new position 201 so that he can judge whether to move to said new position 201 or not.

Figure 1b shows the scenario of Figure 1a after the user has moved the communications device 10 from the old location 200 to the new, preferred location 201.

According to the preceding evaluation in the context of the inventive method, the new location 201 offers improved data transmission in terms of a quality measure such as a power level of a received signal, a SINR or some other suitable quality measure.

Consequently, the communications device 10 outputs visual information 101 on its display 11 which guides the user not to change his and the communication device's location any more in order to experience the improved data transmission conditions at the preferred location 201.

The directional information and/or distance information provided by the inventive communications device 10 may e.g. comprise arrow symbols or the like which are output on an existing display 11 of the communications device 10. Apart from that, the inventive communications device 10 may also comprise dedicated indicator means for optically and/or acoustically signalling said directional information and/or distance information. Such indicating means may e.g. be implemented by a separate light emitting diode matrix which is also enabled to output arrow symbols or directional information in general. Speech output may also be contemplated to guide the user to the preferred location 201.

According to a further preferred embodiment of the present invention, it is also possible to provide a specific signalling to the user once a moving communications device 10 has reached a location 201 which corresponds to at least a local optimum of a predetermined quality measure related to a data transmission. Reaching such a location may also be signalled to the user by kinaesthetic signalling such as vibration of the communication device's case or the like.

According to a particularly preferred embodiment of the present invention, the indicator means for outputting directional information to a user may also be implemented in form of an application, either a software application or a firmware application, which is executed by calculation means of said communications device 10. For instance, the inventive functionality may also be implemented in an existing navigation system of the communications device 10 which advantageously enables to utilise the map data comprised within the navigation system.

Figure 2 shows an embodiment of the inventive communications device 10 in form of a block diagram. The inventive communications device 10 comprises display means 11, local storage means 12 and a wireless data transmission interface 14.

Moreover, the communications device 10 comprises calculation means 13 which may e.g. comprise a microcontroller or a digital signal processor, DSP, that are configured to control the operation of the communications device 10.

Additionally, the communications device 10 comprises dedicated indicator means 15, which may e.g. be configured as a light emitting diode matrix.

With this configuration, the inventive communications device 10 may selectively output the inventive directional information via the display means 11 or the dedicated indicator means 15 or a combination thereof.

According to a further preferred embodiment of the present invention, the inventive communications device 10 is configured to store quality measure values once they have been determined. Preferably, associated position data is also stored together with said quality measure values. The aforementioned data may locally be stored to the storage device 12 which may e.g. be a semiconductor memory unit. Alternatively or in addition to locally storing said data, the quality measure data and/or the position information may also be transmitted to a remote device such as the base station 20, confer Figure 1a. Base station 20 may receive such information and store it to its data base 22.

This variant of the present invention advantageously enables to collect quality measure information and associated position information simultaneously from a plurality of inventive communications devices 10 which results in a detailed map of quality measures for the radio coverage of the corresponding communications network.

Hence, communications devices 10 may also retrieve quality measure data from the central data base 22 hosted by the base station 20 in order to determine which direction to indicate to a user in order to improve data transmission conditions.

The aforedescribed process of data gathering in order to build a quality measure map may obviously be conducted anonymously, i.e. without a user of the communications device 10 being required to present his identity to the base station 20 of the data base 22. Thus, advantageously, the privacy of the user may be maintained.

According to a further embodiment of the present invention, the direction information may also comprise a coloured map which shows to the user differently coloured regions of his surroundings, wherein the colours indicate a predetermined quality measure of data transmission of his communications device 10.

The inventive principle advantageously guides a user to find locations 201 optimally suited for high performance data transmission thus contributing to generate a better user experience when using the inventive communications device 10.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Mobile communications device (10), particularly mobile terminal of a cellular communications network, comprising a data transmission interface (14) capable of wireless data transmission, wherein said communications device (10) is configured to output (330) directional information indicating in which spatial direction to move the communications device (10) in order to improve a predetermined quality measure of a data transmission.

2. Communications device (10) according to claim 1, comprising indicator means for optically and/or acoustically signalling said directional information.

3. Communications device (10) according to claim 2, wherein said indicator means are implemented in form of an application executed by calculation means (12) of said communications device (10).

4. Communications device (10) according to one of the preceding claims, wherein said communications device (10) is configured to determine its position, particularly by employing at least one of the following techniques: a positioning system, particularly the global positioning system, GPS; analyzing a signal strength and/or phase relationships between signals of said wireless data transmission; analyzing cell identifiers of a cellular communications network which enables said wireless data transmission.

5. Communications device (10) according to one of the preceding claims, wherein said communications device (10) is configured to use at least one of the following signal quality metrics as said quality measure: a power level of a signal received at said communications device (10) and/or a further device communicating with said communications device (10), a signal to interference plus noise ratio, SINR, an interference level, an expected throughput, a multiple input multiple output, MIMO, channel rank indicator.

6. Communications device (10) according to one of the preceding claims, wherein said communications device (10) is configured to collect and store information on said quality measure, preferably together with associated position information.

7. Communications device (10) according to one of the preceding claims, wherein said communications device (10) is configured to retrieve information on said quality measure from a local memory and/or a remote device.

8. Communications device (10) according to one of the preceding claims, wherein said communications device (10) is configured to transmit information on said quality measure, preferably together with associated position information, to a remote device (20).

9. Method of operating a mobile communications device (10), particularly mobile terminal of a cellular communications network, said mobile communications device (10) comprising a data transmission interface (14) capable of wireless data transmission, wherein said communications device (10) outputs (330) directional information indicating in which spatial direction to move the communications device (10) in order to improve a predetermined quality measure of a data transmission.

10. Method according to claim 9, wherein said communications device (10) signals said directional information optically and/or acoustically and/or in form of an application executed by calculation means (12) of said communications device (10).

11. Method according to one of the claims 9 to 10, wherein said communications device (10) determines its position, particularly by employing at least one of the following techniques: a positioning system, particularly the global positioning system, GPS; analyzing a signal strength and/or phase relationships between signals of said wireless data transmission; analyzing cell identifiers of a cellular communications network which enables said wireless data transmission.

12. Method according to one of the claims 9 to 11, wherein said communications device (10) uses at least one of the following signal quality metrics as said quality measure: a power level of a signal received at said communications device (10) and/or a further device communicating with said communications device (10), a signal to interference plus noise ratio, SINR, an interference level, an expected throughput, a multiple input multiple output, MIMO, channel rank indicator.

13. Method according to one of the claims 9 to 12, wherein said communications device (10) collects and stores information on said quality measure, preferably together with associated position information.

14. Method according to one of the claims 9 to 13, wherein said communications device (10) transmits information on said quality measure, preferably together with associated position information, to a remote device (20).

15. Method according to one of the claims 9 to 14, wherein said communications device (10) retrieves information on said quality measure from a local memory and/or a remote device (22).
